# EUROPEAN PATENT APPLICATION

(11) **EP 4 553 669 A1**
(43) Date of publication of application: **14.05.2025**
(21) Application number: 24755941.2
(22) Date of filing: 26.01.2024
(51) Int. Cl.: G06F 16/17, G06F 16/16, G06F 9/50

(54) **COMPUTING METHOD, AND DEVICE**

(30) Priority: 13.02.2023 CN 202310155980
(71) Applicant: Huawei Technologies Co., Ltd., Shenzhen, Guangdong 518129 (CN)
(72) Inventor: HUI, Shaobo, Shenzhen, Guangdong 518129 (CN); LIU, Kaiyong, Shenzhen, Guangdong 518129 (CN)
(74) Representative: Körber, Martin Hans
(86) International application number: PCT/CN2024/074197
(87) International publication number: WO 2024/169566

(57) **Abstract**

This application provides a computing method and a device. The computing method may include: When detecting a newly added multimedia file, a second device sends the newly added multimedia file to a first device; the first device performs artificial intelligence AI analysis on the received multimedia file, to obtain feature information of the multimedia file, and sends the feature information of the multimedia file to the second device; and the second device generates an AI album based on the feature information, and/or establishes an index based on the feature information, to provide a search function. In the technical solution, the second device may send a data file that needs to be computed to the first device, and the first device completes corresponding analysis computing, and sends a computing result to the second device, so that computing power of the second device can be released, and costs of the second device can be reduced.

## Description

This application claims priority to Chinese Patent Application No. 202310155980.1, filed with the China National Intellectual Property Administration on February 13, 2023 and entitled "COMPUTING METHOD AND DEVICE", which is incorporated herein by reference in its entirety.

### TECHNICAL FIELD

Embodiments of this application relate to the field of electronic technologies, and more specifically, to a computing method and a device.

### BACKGROUND

When functional computing (for example, artificial intelligence (artificial intelligence, AI) analysis) is performed on a device (for example, a mobile phone), a large amount of computing power of the device is usually consumed, increasing power consumption of the device, and requiring the device to have high performance.

If the device has high performance, costs of the device are inevitably increased. If the device has insufficient performance, lagging and overheating occur when the foregoing functional computing is performed.

### SUMMARY

Embodiments of this application provide a computing method and a device. In the technical solutions, when a first device establishes a communication connection to a second device, the second device sends a data file that needs to be computed to the first device, the first device completes corresponding analysis computing, and sends a computing result to the second device, so that computing power of the second device can be released, and costs of the second device can be reduced.

According to a first aspect, a computing method is provided, where the method is applied to a first device, and the method includes: receiving a multimedia file sent by a second device; performing artificial intelligence AI analysis on the multimedia file, to obtain feature information of the multimedia file; and sending the feature information of the media file to the second device.

For example, the multimedia file may include an image, a video, audio, a dynamic image, and a text.

The first device may be a home storage device, and the second device may be a smartphone, a tablet computer, a notebook computer, or the like.

It should be understood that the first device may establish a communication connection to the second device.

It should be understood that the first device performing AI analysis on the multimedia file may be understood as that the first device performs AI analysis on the multimedia file by using a plurality of AI models, to obtain a plurality of pieces of feature information of the multimedia file.

In embodiments of this application, the first device may receive the multimedia file sent by the second device, perform AI analysis on the multimedia file to obtain the feature information of the multimedia file, and send the feature information to the second device.

In this way, the second device may send, to the first device, the multimedia file on which AI analysis computing needs to be performed, for the first device to complete corresponding AI analysis computing, and the first device sends a computing result to the second device, thereby releasing computing power of the second device. In addition, various AI models may not need to be deployed on the second device, thereby reducing costs of the second device.

With reference to the first aspect, in an implementation of the first aspect, the method further includes: receiving metadata that is of the multimedia file and that is sent by the second device; and determining whether the multimedia file matches the metadata of the multimedia file.

In embodiments of this application, the first device may further receive the metadata that is of the multimedia file and that is sent by the second device, and further determine whether the multimedia file matches the metadata of the multimedia file. This technical solution helps the first device determine accuracy of received data.

With reference to the first aspect, in an implementation of the first aspect, the performing AI analysis on the multimedia file, to obtain feature information of the multimedia file includes: When determining that the multimedia file matches the metadata of the multimedia file, the first device performs AI analysis on the multimedia file, to obtain the feature information of the multimedia file.

In embodiments of this application, when determining that the multimedia file matches the metadata of the multimedia file, the first device performs AI analysis on the multimedia file, to obtain the feature information of the multimedia file. This technical solution can help ensure that the first device performs AI analysis on a correct multimedia file.

With reference to the first aspect, in an implementation of the first aspect, the method further includes: When determining that the multimedia file does not match the metadata of the multimedia file, the first device sends first information to the second device, where the first information indicates that the multimedia file does not match the metadata of the multimedia file.

In embodiments of this application, when determining that the multimedia file does not match the metadata of the multimedia file, the first device may send the first information to the second device. In this way, a user may be notified of a data error.

With reference to the first aspect, in an implementation of the first aspect, the method further includes: receiving a request message sent by the second device; and the sending the feature information of the multimedia file to the second device includes: sending the feature information of the multimedia file to the second device based on the request message.

In embodiments of this application, the first device may send the feature information of the multimedia file to the second device based on the request message of the second device. Therefore, memory overheads of the second device can be reduced.

With reference to the first aspect, in an implementation of the first aspect, the method further includes: generating a thumbnail of the multimedia file.

In embodiments of this application, the first device may further generate the thumbnail of the multimedia file. Because the thumbnail occupies small memory, when the user views the multimedia file, the first device can quickly display the thumbnail of the multimedia file.

With reference to the first aspect, in an implementation of the first aspect, the feature information of the multimedia file includes at least one of the following pieces of information: face information, label classification information, optical character recognition information, multimode vector information, and aesthetic score information.

It may be understood that the feature information of the multimedia file may further include other information in addition to the foregoing information, for example, location information. This is not limited in embodiments of this application.

According to a second aspect, a computing method is provided, where the method is applied to a second device, and the method includes: when detecting a newly added multimedia file, sending the newly added multimedia file to a first device; receiving feature information that is of the multimedia file and that is sent by the first device; and generating an artificial intelligence AI album based on the feature information of the multimedia file, and/or establishing an index based on the feature information of the multimedia file, to provide a search function.

For example, when a user uses the second device to shoot an image or a video, the second device may detect the newly added multimedia file.

In embodiments of this application, when detecting the newly added multimedia file, the second device may send the newly added multimedia file to the first device, and receive the feature information that is of the newly added multimedia file and that is sent by the first device. Then, the first device may generate the AI album based on the feature information of the multimedia file, and/or establish the index based on the feature information of the multimedia file, to provide the search function.

In this way, the second device may send, to the first device, the multimedia file on which AI analysis computing needs to be performed, for the first device to complete corresponding AI analysis computing, and the first device sends a computing result to the second device, thereby releasing computing power of the second device. In addition, various AI models may not need to be deployed on the second device, thereby reducing costs of the second device.

With reference to the second aspect, in an implementation of the second aspect, before the receiving feature information that is of the multimedia file and that is sent by the first device, the method further includes: sending metadata of the multimedia file to the first device.

In embodiments of this application, before receiving the feature information that is of the newly added multimedia file and that is sent by the first device, the second device may further send the metadata of the newly added multimedia file to the first device. This helps the first device determine correctness of the received multimedia file.

With reference to the second aspect, in an implementation of the second aspect, the method further includes: storing the feature information.

For example, the second device may store the feature information of the multimedia file in an internal memory of the second device, or the second device stores the feature information on a cloud.

In embodiments of this application, the second device may store the feature information of the multimedia file, so that another application on the second device can invoke the feature information.

With reference to the second aspect, in an implementation of the second aspect, the feature information of the multimedia file includes at least one of the following pieces of information: face information, label classification information, optical character recognition information, multimode vector information, and aesthetic score information.

It may be understood that the feature information of the multimedia file may further include other information in addition to the foregoing information, for example, location information. This is not limited in embodiments of this application.

According to a third aspect, a first device is provided, including one or more processors, and one or more memories, where the one or more memories store one or more programs, and when the one or more programs are executed by the one or more processors, the computing method according to the first aspect and any one of the possible implementations of the first aspect is performed.

According to a fourth aspect, a first device is provided, including a module configured to implement the computing method according to the first aspect and any one of the possible implementations of the first aspect.

According to a fifth aspect, a second device is provided, including one or more processors, and one or more memories, where the one or more memories store one or more programs, and when the one or more programs are executed by the one or more processors, the computing method according to the second aspect and any one of the possible implementations of the second aspect is performed.

According to a sixth aspect, a second device is provided, including a module configured to implement the computing method according to the second aspect and any one of the possible implementations of the second aspect.

According to a seventh aspect, a system is provided, including the first device according to the third aspect or the fourth aspect and the second device according to the fifth aspect or the sixth aspect.

According to an eighth aspect, a chip is provided, where the chip includes a processor and a communication interface, the communication interface is configured to: receive a signal and transmit the signal to the processor, and the processor processes the signal, for performing the computing method according to the first aspect and any one of the possible implementations of the first aspect.

According to a ninth aspect, a chip is provided, where the chip includes a processor and a communication interface, the communication interface is configured to: receive a signal and transmit the signal to the processor, and the processor processes the signal, for performing the computing method according to the second aspect and any one of the possible implementations of the second aspect.

According to a tenth aspect, a readable storage medium is provided, where the readable storage medium stores instructions, and when the instructions are run on a device, the computing method according to the first aspect and any one of the possible implementations of the first aspect is performed.

According to an eleventh aspect, a readable storage medium is provided, where the readable storage medium stores instructions, and when the instructions are run on a device, the computing method according to the second aspect and any one of the possible implementations of the second aspect is performed.

According to a twelfth aspect, a program product is provided, where the program product includes program code, and when the program code is run on a device, the computing method according to the first aspect and any one of the possible implementations of the first aspect is performed.

According to a thirteenth aspect, a program product is provided, where the program product includes program code, and when the program code is run on a device, the computing method according to the second aspect and any one of the possible implementations of the second aspect is performed.

### BRIEF DESCRIPTION OF DRAWINGS

FIG. 1 is a diagram of a scenario to which a computing method according to an embodiment of this application is applicable;
FIG. 2 is a diagram of a framework of a device according to an embodiment of this application;
FIG. 3 is a diagram of a framework of another device according to an embodiment of this application;
FIG. 4 is a schematic flowchart of a computing method according to an embodiment of this application;
FIG. 5 is an interaction diagram of a computing method according to an embodiment of this application; and
FIG. 6 is a block diagram of a device according to an embodiment of this application.

### DESCRIPTION OF EMBODIMENTS

The following describes technical solutions of embodiments of this application with reference to accompanying drawings.

Before the technical solutions of this application are described, some technical terms that may be related in this application are first briefly described.

A software development kit (software development kit, SDK) is a collection of development tools used by a developer to develop application software for a specific software package, a software framework, a hardware platform, an operating system, and the like. There is also an SDK for a specific software function, for example, a synchronization service SDK, which can be used for data synchronization.

Metadata is data that describes data, mainly describes information about a property (property) of the data, and can indicate a storage location, historical data, resource searching, a file record, and a data size.

When some functional computing (for example, AI analysis) is performed on a device (for example, a mobile phone), a large amount of computing power of the device is usually consumed, increasing power consumption of the device, and requiring the device to have high performance.

If the device has high performance, costs of the device are inevitably increased. If the device has insufficient performance, lagging and overheating occur when the foregoing functional computing is performed.

In view of this, this application provides a computing method and a device. In the technical solution, when a first device establishes a communication connection to a second device, the second device sends a data file that needs to be computed to the first device, the first device completes corresponding analysis computing, and sends a computing result to the second device, so that computing power of the second device can be released, and costs of the second device can be reduced.

For ease of description, in embodiments of this application, the computing method provided in embodiments of this application is described in detail by using an example in which a data file is a multimedia file and AI analysis computing is performed on the multimedia file. However, this does not constitute a limitation on an application scenario of the technical solutions provided in embodiments of this application.

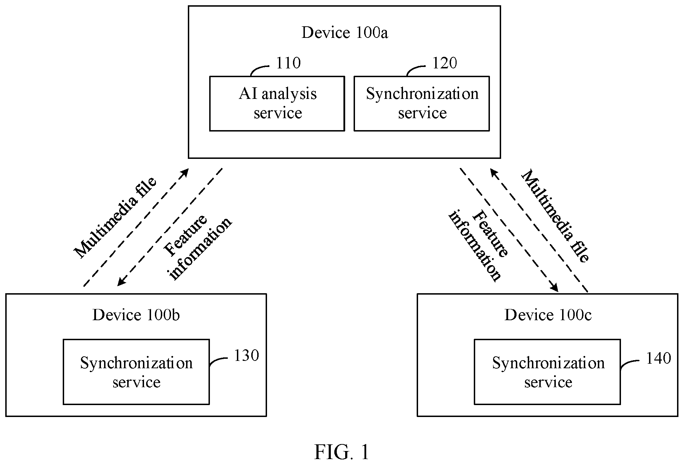

FIG. 1 is a diagram of a scenario to which a computing method according to an embodiment of this application is applicable. As shown in FIG. 1, the computing method provided in this embodiment of this application may be applied to a scenario in which a device 100a, a device 100b, and a device 100c access each other.

The device 100a may establish a communication connection to the device 100b, and the device 100a may establish a communication connection to the device 100c. For example, the device 100a and the device 100b may be in a same local area network, and the device 100a and the device 100c may be in a same local area network. Alternatively, the device 100a, the device 100b, and the device 100c log in to a same account, for example, the device 100a, the device 100b, and the device 100c log in to a same Huawei account. Alternatively, the device 100a may establish a communication connection to the device 100b, and the device 100a may establish a communication connection to the device 100c through Bluetooth, ultra wide band (ultra wide band, UWB), a wired manner, or another manner. This is not limited in embodiments of this application.

In this scenario, when detecting a newly added multimedia file, the device 100b may send the newly added multimedia file to the device 100a. An AI analysis service 110 in the device 100a may be used to perform AI analysis on the newly added multimedia file, to obtain AI feature information of the newly added multimedia file. Then, the device 100a may send the AI feature information to the device 100b.

For example, when a user uses the device 100b to shoot an image or a video, the device 100b may send the shot image or video to the device 100a, and the image or the video may be analyzed through the AI analysis service 110 in the device 100a, to obtain AI feature information of the image or the video. Then, the device 100a may send the AI feature information to the device 100b, and another application or service in the device 100b may directly use the AI feature information, so that the device 100b can perform AI analysis on the image or the video without consuming additional computing power. In addition, no AI model needs to be deployed in the device 100b, so that costs of the device 100b can be saved.

Similarly, when detecting a newly added multimedia file, the device 100c may send the newly added multimedia file to the device 100a. The AI analysis service 110 in the device 100a may be used to perform AI analysis on the newly added multimedia file, to obtain AI feature information of the newly added multimedia file. Then, the device 100a may send the AI feature information to the device 100c.

It should be understood that the AI feature information may include but is not limited to face information, label classification information, optical character recognition (optical character recognition, OCR) information, multimode vector information, aesthetic score information, and the like.

The multimedia file may be an image, audio, a video, a dynamic picture, or the like.

For example, the device 100a may be a home storage device, for example, a Huawei home storage device.

For example, the device 100b and the device 100c may be a smartphone, a notebook computer, a tablet computer, a wearable device, or the like.

In some examples, the device 100a may include the AI analysis service 110, a synchronization service 120, and the like. The AI analysis service 110 may be used to perform AI analysis on a multimedia file, to obtain AI feature information of the multimedia file. The synchronization service 120 may be used for data synchronization between the device 100a and another device.

The device 100b may include a synchronization service 130, and the device 100c may include a synchronization service 140. The synchronization service 130 may be used for data synchronization between the device 100b and the device 100a. The synchronization service 140 may be used for data synchronization between the device 100c and the device 100a.

For example, the synchronization service 130 may be deployed in an application of the device 100b in a form of SDK.

It may be understood that, in some other examples, the application scenario may not include the device 100b or the device 100c, or the application scenario may further include more devices 100b or more devices 100c. This is not limited in embodiments of this application.

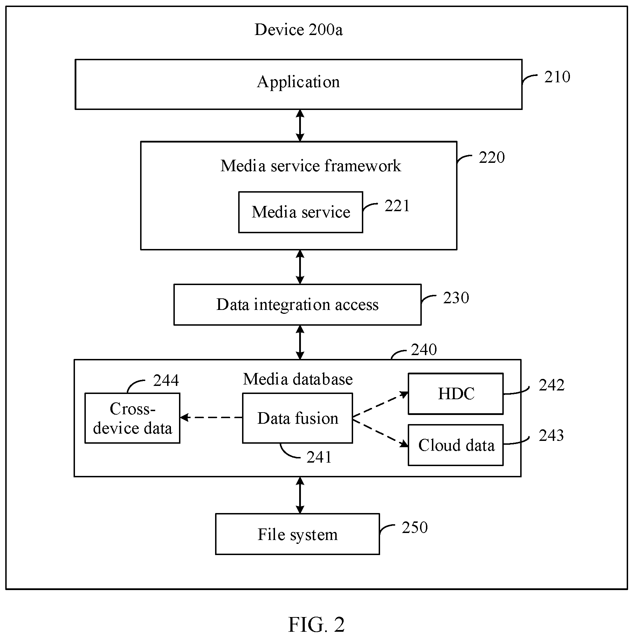

FIG. 2 is a diagram of a framework of a device according to an embodiment of this application. As shown in FIG. 2, a device 200a may include at least an application 210, a media service framework 220, a data fusion access 230, a media database (media library) 240, and a file system 250.

The application 210 may be a third-party application or a system application installed in the device 200a.

The media service framework 220 may include a media service 221. The media service 221 may be used to scan data, and write a newly added multimedia file found through scanning into the media database 240.

The media database 240 may include data fusion 241. The data fusion 241 may be used to normalize, fuse, and store data of a plurality of ends in different formats. For example, the data fusion 241 may be used to normalize, fuse, and store home data center (home data center, HDC) data 242, cloud data 243, and cross-device data 244.

The HDC data 242 may be data stored in a home storage device, for example, may be metadata, AI feature information, or the like. The cloud data 243 may be data stored in a cloud. The cross-device data 244 may be data stored in another device that is located in a same local area network as the device 200a or that logs in to a same account as the device 200a.

The file system 250 may be used to manage and store file information. In embodiments of this application, the file system 250 may be used to transmit data to another device through a synchronization service. For example, when data synchronization is required, the device 200a may transmit the data to the synchronization service by using the file system 250, and the data is transmitted to another device through the synchronization service.

It may be understood that FIG. 2 is an example of the device 200a provided in embodiments of this application, and does not constitute a specific limitation on the device 200a. In some other embodiments of this application, the device 200a may include more or fewer modules than those shown in the figure.

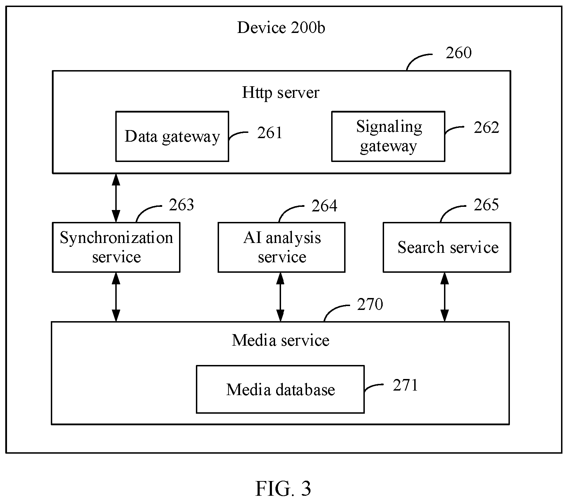

FIG. 3 is a diagram of a framework of another device according to an embodiment of this application. As shown in FIG. 3, the device 200b may include at least an http server 260, a synchronization service 263, an Al analysis service 264, a search service 265, and a media service 270.

The http server 260 may include a data gateway 261 and a signaling gateway 262. The http server may be configured to process a request of another device (for example, the device 200a) and return a corresponding response. The data gateway 261 may be configured to control data transmission, and the signaling gateway 262 may be configured to manage a communication channel.

For example, the another device may transmit the multimedia file to the device 200b and receive a response from device 200b over a hyper text transfer protocol secure (hyper text transfer protocol secure, HTTPS).

In some other examples, the another device may alternatively transmit the multimedia file to the device 200b in another manner. This is not limited in embodiments of this application.

The synchronization service 263 may be used to write metadata of the multimedia file into a media database of the media service. The synchronization service 263 may be further used to transmit feature information obtained through the AI analysis service to the another device.

The AI analysis service 264 may be used to run an AI algorithm to perform AI analysis on the multimedia file, to obtain corresponding feature information, and store the feature information in a database of the AI analysis service.

The search service 265 can build an index based on the media database of the media service and the database of the AI analysis service to provide a search service for a user.

The media service 270 may be used to detect and scan data, and generate a thumbnail, an LCD image, and the like.

The media service 270 may include a media database 271, and the media database 271 may be configured to store data.

It may be understood that FIG. 3 is an example of the device 200b provided in embodiments of this application, and does not constitute a specific limitation on the device 200b. In some other embodiments of this application, the device 200b may include more or fewer modules than those shown in the figure.

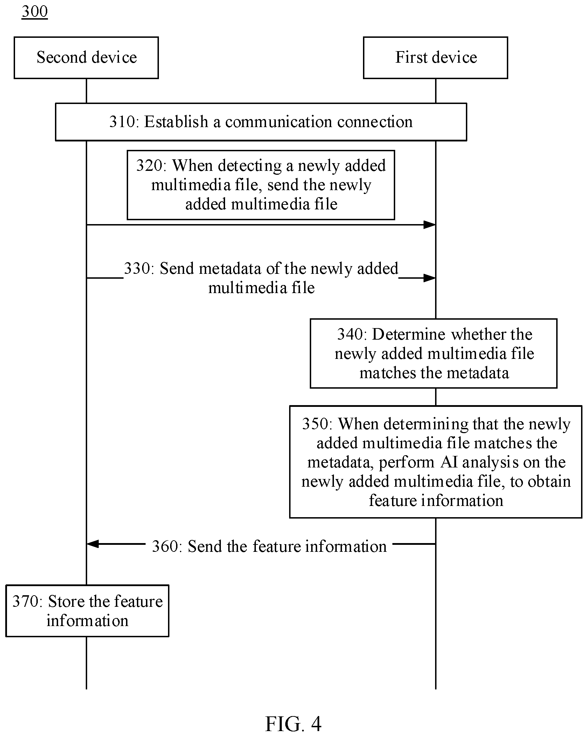

FIG. 4 is a schematic flowchart of a computing method according to an embodiment of this application. As shown in FIG. 4, a method 300 may include step 310 to step 370.

310: A first device establishes a communication connection to a second device.

It may be understood that, for a manner in which the first device establishes the communication connection to the second device, refer to the foregoing related description of establishing the communication connection between the device 100a and the device 100b. For brevity, details are not described herein again.

For example, the second device may be the foregoing device 100b or device 100c, for example, a smartphone. The first device may be the foregoing device 100a, for example, a home storage device.

320: When detecting a newly added multimedia file, the second device sends the newly added multimedia file to the first device. Correspondingly, the first device receives the multimedia file.

For example, the multimedia file may be an image, audio, a video, or a dynamic image. A specific form of the multimedia file is not limited in embodiments of this application.

In some examples, when the second device turns on a camera based on an operation of a user and shoots an image A, the shot image A is the newly added multimedia file, and the second device may send the image A to the first device.

For example, when there is a newly added multimedia file, data may be scanned through a media service of the second device, and the scanned newly added multimedia file is written into a media database. After a data change in the media database is detected through a synchronization service of the second device, the newly added multimedia file is sent to the first device, and the first device stores the newly added multimedia file in an internal memory of the second device or on a cloud.

330: The second device sends metadata of the newly added multimedia file to the first device. Correspondingly, the first device receives the metadata of the multimedia file.

It may be understood that the second device sends the metadata of the newly added multimedia file to the first device, so that the first device can determine correctness of the received multimedia file, and the first device can resolve a problem of a multimedia file name conflict or multimedia file duplication.

For example, the second device sends the metadata of the newly added multimedia file to a synchronization service of the first device through the synchronization service, and the metadata of the newly added multimedia file may be written into a database of a media service through the synchronization service of the first device.

In embodiments of this application, an example of a table used to represent the metadata may be as follows.

**Table 1**

| Field name | Data type | Description |
|---|---|---|
| fileId | String string | Device-side file identifier, used to download an original image |
| videoThumbId | String | If a file is a video, the field is a video thumbnail ID |
| fileUrl | String | File download link |
| thumbUrl | String | Thumbnail address |
| fileName | String | File name |
| albumId | String | ID of an album in which the file is located |
| hash | String | Hash value of the file |
| source | String | Name of a source device of the file, like ELS-AN00 (for example, the file is synchronized from another device) |
| expandString | String | Extension field, stored by a server as a JSON character string and not parsed |
| otype | String | Operation type: 0-add, 1-modify, and 2-delete |
| sdsctime | String | Storage time at which data is stored in a structured query language data service (SQL data service, SDS) database, and can be accurate to seconds (cloud sharing) |
| uniqueId | String | Unique identifier of the file, generated and returned by the server |
| thumbFileld | String | File ID obtained after the thumbnail is uploaded and stored |
| lcdFileId | String | File ID used for downloading a thumbnail |
| recycleAlbumId | String | Recycle bin album ID |
| deviceId | String | Device number, which is of a ciphertext |
| dstAlbumId | String | Destination album, which is valid when otype=1, and records a destination album ID during an update modification operation |
| userId | String | ID of an owner of the album to which the file belongs |
| localThumbPath | String | Local small thumbnail cache path; if the file is a video, frame images of the video are stored in the cache path |
| localBigThumbPath | String | Local LCD image cache path |
| localRealPath | String | Local original image cache path |
| fileUploadType | String | Upload type, distinguished by path |
| lpath | String | Relative path of an album, for example, /DCIM/Camera |
| albumName | String | Album name |
| resource | String | Corresponding album resource, download request parameter |
| localId | String | An incremental database ID may be entered, to match a return value |
| sdsmtime | String | Last update time of data in an SDS database, which is accurate to seconds, and is used to check whether the data is updated |
| srcAlbumId | String | Source album ID, recorded during copying to a recycle bin |
| oversion | Long long | Operation version |
| size | Long | File size |
| addTime | Long | Time at which a file upload task is added |
| createTime | Long | Time at which the file is created |
| timeStamp | Long | Timestamp, used for a gallery to confirm modification time |
| recycletime | Long | Time of entering the recycle bin |
| file Type | fileType | File type: 1-common image, 2-audio image, 3-focus (focus) image, 4-video, and 5-screenshot |
| favorite | Bool bool | Favorite information: 0-not added to favorites, and 1-added to favorites |

340: The first device determines whether the newly added multimedia file matches the metadata.

For example, after the metadata of the newly added multimedia file is written into the database of the media service through the synchronization service of the first device, data may be scanned through the media service of the first device, to determine whether the newly added multimedia file matches the metadata.

In a possible implementation, when determining that the newly added multimedia file matches the metadata, the first device may perform step 350.

In another possible implementation, when the first device determines that the newly added multimedia file does not match the metadata, the first device may send a data error message to the second device. For example, when there is a duplicate multimedia file or a multimedia file conflicts with the multimedia file in name, the first device may send, to the second device, a message indicating that a file is duplicate or a name is duplicate.

In some examples, when the multimedia file is an image or a video, the first device may further determine whether there is a thumbnail and an image in an LCD format of the image or the video. When it is determined that there is no thumbnail and the image in the LCD format of the image or the video, the first device may generate the thumbnail and the image in the LCD format of the image or the video, so that the first device performs AI analysis on the image in the LCD format of the image or the video subsequently through various AI models.

It should be understood that, because the thumbnail of the image or the video occupies small memory, during viewing of the user, the thumbnail may be quickly displayed, to facilitate viewing of the user.

350: When determining that the newly added multimedia file matches the metadata, the first device performs AI analysis on the newly added multimedia file, to obtain feature information.

For example, the first device may include an AI analysis service. Feature information obtained by performing AI analysis computing on the newly added multimedia file through the AI analysis service may include but is not limited to face information, label classification information, optical character recognition (optical character recognition, OCR) information, multimode vector information, aesthetic score information, and the like.

An example of a table used to represent the label classification information may be as follows.

**Table 2**

| Field name | Data type | Description |
|---|---|---|
| fileId | Uint64_t | Unique ID of a photo or a video |
| categoryId | String | Category label (for example, scenery) |
| subLabel | String | Sub-category label (for example, sky and grass) |
| prob | Float | Confidence (ranging from 0 to 1) |

It should be understood that the label classification information may be obtained by the first device by performing AI analysis on the newly added multimedia file based on a classification algorithm.

An example of a table used to represent the OCR information may be as follows.

**Table 3**

| Field name | Data type | Description |
|---|---|---|
| fileId | Uint64_t | Unique ID of a photo |
| ocrText | String | OCR text information in the photo |

It should be understood that the OCR information may be obtained by the first device by performing AI analysis on the newly added multimedia file based on an OCR algorithm.

An example of a table used to represent the aesthetic score information may be as follows.

**Table 4**

| Field name | Data type | Description |
|---|---|---|
| fileId | Uint64_t | Unique ID of a photo |
| beauty Score | Float | Score |

It should be understood that the aesthetic score information may be obtained by the first device by performing AI analysis on the newly added multimedia file based on an aesthetic score algorithm.

An example of a table used to represent the multimode vector information may be as follows.

**Table 5**

| Field name | Data type | Description |
|---|---|---|
| fileId | Uint64_t | Unique ID of a photo |
| feature | Float[128] | 128-bit vector generated by using the image |
| label | String | Whitelist label (used for filtering during search of a search service) |

It should be understood that the multimode vector information may be obtained by the first device by performing AI analysis on the newly added multimedia file based on a multimode vector algorithm.

An example of a table used to represent the face information may be as follows.

**Table 6**

| Field name | Data type | Description |
|---|---|---|
| fileId | Uint64_t | Unique ID of a photo or a video |
| faceId | Uint64_t | Face ID |
| clusterId | Uint64_t | Cluster ID |
| features | Float[256] | Face feature data |
| xPos | Float | Facial coordinates |
| yPos | Float | Facial coordinates |
| width | Float | Face width |
| height | Float | Face length |
| age | Int | Age |

It should be understood that the face information may be obtained by the first device by performing AI analysis on the newly added multimedia file based on a facial recognition algorithm and a face clustering algorithm.

In some other examples, when determining that the newly added multimedia file matches the metadata, the first device may further perform analysis computing other than AI analysis on the newly added multimedia file. This is not limited in embodiments of this application.

In some examples, the first device may further write the feature information into the database.

360: The first device sends the feature information to the second device. Correspondingly, the second device receives the feature information.

For example, the feature information is transmitted to the synchronization service of the second device through the synchronization service of the first device.

370: The second device stores the feature information.

For example, the second device may store the feature information in the media database, or the second device may store the feature information on a cloud. In this way, another application on the second device can invoke the feature information.

For example, after the second device stores the feature information, the user may view the feature information in a gallery.

In some examples, the method 300 may further include step 380.

380: The second device generates an AI album based on the feature information, and/or the second device establishes an index based on the feature information, to provide a search function.

For example, the second device may generate the AI album based on the feature information. For example, the second device may generate, based on the feature information, an AI album of a same label or at a same location, to facilitate viewing of the user.

For example, the second device may establish the index based on the feature information, to provide the search function for the user. For example, after the second device establishes the index based on the feature information, the user may enter a keyword in an album for search, and the second device may display a corresponding search result to the user based on a search operation of the user.

In some other examples, the second device may further generate a cover of an album based on the feature information. For example, a photo with a highest score of aesthetic score information of the photo is used as the cover of the album.

It should be understood that a quantity of the second devices is not limited in embodiments of this application. For example, when there are a plurality of second devices, the plurality of second devices may share the first device. Therefore, an AI model needs to be deployed only on the first device to perform the foregoing AI analysis, and no AI model needs to be deployed on the second device, so that memory of the second device can be effectively released.

It should be understood that a specific order of performing step 310 to step 370 is not limited in embodiments of this application. In some examples, some steps of step 310 to step 370 may not be performed, or may be replaced with other steps.

For example, step 330 and step 340 may not be performed. In this case, step 350 may be replaced with the following step 350a.

350a: The first device performs AI analysis on the newly added multimedia file, to obtain feature information of the multimedia file.

In an embodiment of this application, in a case in which the first device establishes the communication connection to the second device, when detecting a newly added multimedia file, the second device may send the newly added multimedia file to the first device, and may send metadata of the newly added multimedia file to the first device. The first device may determine whether the newly added multimedia file matches the metadata. When determining that the newly added multimedia file matches the metadata, the first device may perform AI analysis on the newly added multimedia file, to obtain corresponding feature information. Then, the first device may send the feature information to the second device, and the second device may generate an AI album based on the feature information, and/or establish an index based on the feature information.

In this way, the second device may transfer complex AI analysis computing to the first device, so that various AI models do not need to be deployed on the second device. In this way, computing power of the second device is released, costs of the second device are further reduced, and power consumption of the second device is further reduced.

In addition, a high-precision and high-dimension AI model may be deployed on the first device, so that accuracy of an AI analysis result can be improved.

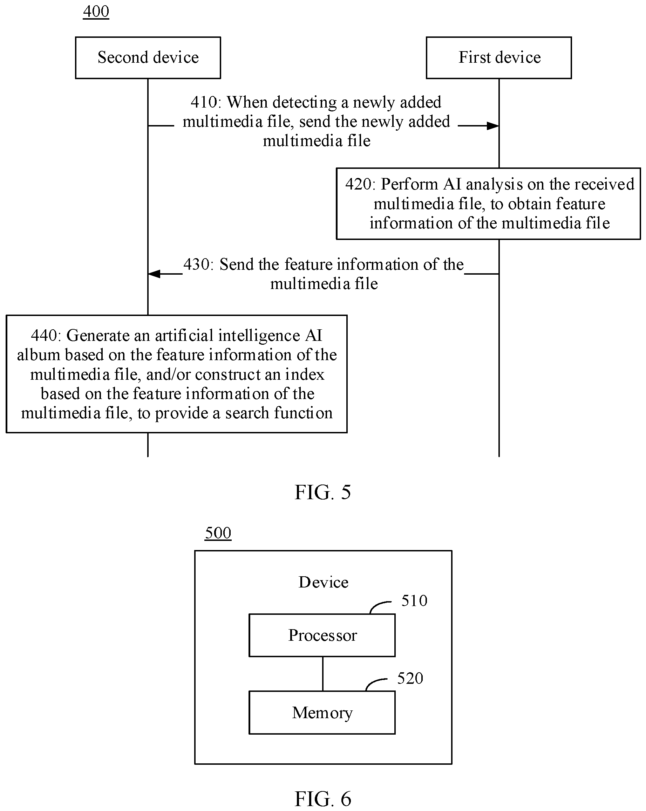

FIG. 5 is an interaction diagram of a computing method according to an embodiment of this application. As shown in FIG. 5, a method 400 may be applied to a first device and a second device, and the method 400 may include step 410 to step 440.

It should be understood that the first device may establish a communication connection to the second device. For a manner of establishing the communication connection, refer to the foregoing related descriptions.

In some other examples, a user may further bind, to an AI Life application installed on the first device, the second device that can communicate with the first device.

410: When detecting a newly added multimedia file, the second device sends the newly added multimedia file to the first device.

For example, the second device may be a smartphone, and the first device may be a home storage device. When the user uses the second device to shoot an image or a video, it may be understood that there is a newly added multimedia file. When detecting the newly added multimedia file, the second device may send the newly added multimedia file to the first device.

In some examples, the multimedia file may include an image, a video, audio, a dynamic image, and a text.

420: The first device performs AI analysis on the received multimedia file, to obtain feature information of the multimedia file.

It should be understood that the first device performing AI analysis on the multimedia file may be understood as that the first device performs AI analysis on the multimedia file by using a plurality of AI models, to obtain a plurality of pieces of feature information of the multimedia file.

For example, the first device may perform AI analysis on the received multimedia file based on a facial recognition algorithm and a face clustering algorithm, to obtain face information of the multimedia file. The first device may perform AI analysis on the received multimedia file based on a classification algorithm, to obtain label classification information of the multimedia file. The first device may perform AI analysis on the received multimedia file based on an OCR algorithm, to obtain OCR information of the multimedia file. The first device may perform AI analysis on the received multimedia file based on an aesthetic score algorithm, to obtain aesthetic score information of the multimedia file. The first device may perform AI analysis on the received multimedia file based on a multimode vector algorithm, to obtain multimode vector information of the multimedia file.

It may be understood that an AI model that can perform the foregoing algorithm needs to be pre-deployed on the first device.

In some other examples, the first device may further perform other analysis computing on the multimedia file. This is not limited in embodiments of this application.

430: The first device sends the feature information of the multimedia file to the second device.

For example, after performing AI analysis on the received multimedia file to obtain the feature information of the multimedia file, the first device may directly send the feature information of the multimedia file to the second device.

In some other examples, the first device may alternatively send the feature information of the multimedia file to the second device in response to a request message of the second device.

For example, when the user views the feature information of the multimedia file, the second device may send the request message to the first device, to request the first device to send the feature information of the multimedia file to the second device. After receiving the request message sent by the second device, the first device sends the feature information of the multimedia file to the second device.

In some other examples, the second device may further send, to the first device, data other than the multimedia file, for example, another data file that needs to consume a large amount of computing power of the second device. In this case, the first device may further perform analysis computing on the another data file, and send a computing result to the second device.

440: The second device generates an artificial intelligence AI album based on the feature information of the multimedia file, and/or the second device establishes an index based on the feature information of the multimedia file, to provide a search function.

For example, the second device may generate the AI album based on the feature information. For example, the second device may generate, based on the feature information, an AI album of a same label or at a same location, to facilitate viewing of the user.

For example, the second device may establish the index based on the feature information, to provide the search function for the user. For example, after the second device establishes the index based on the feature information, the user may enter a keyword in an album for search, and the second device may display a corresponding search result to the user based on a search operation of the user.

In some other examples, the second device may further generate a cover of an album based on the feature information. For example, a photo with a highest score of aesthetic score information of the photo is used as the cover of the album.

In some other examples, the second device may further perform another operation based on the feature information of the multimedia file. For example, the second device displays a recommended folder, card, or the like in a home screen of the second device based on the feature information of the multimedia file.

In an embodiment of this application, when detecting the newly added multimedia file, the second device may send the newly added multimedia file to the first device. The first device may perform AI analysis on the received multimedia file to obtain the feature information of the multimedia file, and send the feature information of the multimedia file to the second device. The second device may generate the AI album based on the feature information, and/or the second device may establish the index based on the feature information, to provide the search function.

In this way, the second device may send, to the first device, the multimedia file on which AI analysis computing needs to be performed, for the first device to complete corresponding AI analysis computing, and the first device sends a computing result to the second device, thereby releasing computing power of the second device. In addition, various AI models may not need to be deployed on the second device, thereby reducing costs of the second device.

In some embodiments, the method 400 may further include the following steps.

The first device receives the metadata that is of the newly added multimedia file and that is sent by the second device; and
the first device determines whether the multimedia file matches the metadata of the multimedia file.

In an embodiment of this application, the first device may further receive the metadata that is of the multimedia file and that is sent by the second device, and further determine whether the multimedia file matches the metadata of the multimedia file. This technical solution helps the first device determine accuracy of received data.

In some embodiments, that the first device performs AI analysis on the multimedia file to obtain feature information of the multimedia file includes: When determining that the multimedia file matches metadata of the multimedia file, the first device performs AI analysis on the multimedia file to obtain the feature information of the multimedia file.

In an embodiment of this application, when determining that the multimedia file matches the metadata of the multimedia file, the first device performs AI analysis on the multimedia file, to obtain the feature information of the multimedia file. This technical solution can help ensure that the first device performs AI analysis on a correct multimedia file.

In some embodiments, the method 400 may further include the following step.

When determining that the multimedia file does not match the metadata of the multimedia file, the first device sends first information to the second device, where the first information indicates that the multimedia file does not match the metadata of the multimedia file.

For example, when there is a duplicate multimedia file or a multimedia file with a duplicate name, the first device may send corresponding information to the second device, to notify the user to make modification.

In an embodiment of this application, when determining that the multimedia file does not match the metadata of the multimedia file, the first device may send the first information to the second device. In this way, the user may be notified of a data error.

In some embodiments, the method 400 may further include the following step.

The first device generates a thumbnail of the multimedia file.

In embodiments of this application, the first device may further generate the thumbnail of the multimedia file. Because the thumbnail occupies small memory, when the user views the multimedia file, the first device can quickly display the thumbnail of the multimedia file.

In some embodiments, the feature information of the multimedia file includes at least one of the following pieces of information: face information, label classification information, optical character recognition information, multimode vector information, and aesthetic score information.

It may be understood that the feature information of the multimedia file may further include other information in addition to the foregoing information, for example, location information. This is not limited in embodiments of this application.

In some embodiments, the method 400 may further include the following step.

The first device receives the request message sent by the second device.

That the first device sends feature information of the multimedia file to the second device includes the following step.

The first device sends the feature information of the multimedia file to the second device based on the request message.

In embodiments of this application, the first device may send the feature information of the multimedia file to the second device based on the request message of the second device. Therefore, memory overheads of the second device can be reduced.

In some embodiments, the method 400 may further include the following step.

The second device stores the feature information of the multimedia file.

For example, the second device may store the feature information in an internal memory of the second device, or the second device stores the feature information on a cloud.

In embodiments of this application, the second device may store the feature information, so that another application on the second device can invoke the feature information.

FIG. 6 is a block diagram of a device according to an embodiment of this application. As shown in FIG. 6, a device 500 may include one or more processors 510, and one or more memories 520. The one or more memories 520 store one or more programs. When the one or more programs are executed by the one or more processors 510, the computing method according to any one of the foregoing possible implementations is performed.

In some embodiments, the device 500 may be the foregoing first device (for example, a home storage device). When the one or more programs are executed by the one or more processors 510, the device 500 may perform the foregoing steps performed by the first device to implement corresponding functions.

In some embodiments, the device 500 may be the foregoing second device (for example, a smartphone or a tablet computer). When the one or more programs are executed by the one or more processors 510, the device 500 may perform the foregoing steps performed by the second device to implement corresponding functions.

An embodiment of this application further provides a chip. The chip includes a processor and a communication interface. The communication interface is configured to receive a signal and transmit the signal to the processor. The processor processes the signal, for performing the computing method according to any one of the foregoing possible implementations.

It may be understood that, to implement the foregoing functions, the device includes corresponding hardware and/or a corresponding software module for performing each function. With reference to algorithm steps of examples described in embodiments disclosed in this specification, this application can be implemented in a form of hardware or a combination of hardware and software. Whether a function is performed by the hardware or hardware driven by software depends on particular applications and design constraints of the technical solutions. A person skilled in the art may use different methods to implement the described functions for each specific application with reference to embodiments. However, it should not be considered that the implementation goes beyond the scope of this application.

In embodiments, function modules of the device may be obtained through division according to the foregoing method examples. For example, the function modules may be obtained through division corresponding to various functions, or two or more functions may be integrated into one processing module. The integrated module may be implemented in a form of hardware. It should be noted that module division in embodiments is an example and is merely logical function division. In practice, there may be another division manner.

This embodiment further provides a device, including a module configured to implement the computing method in the foregoing embodiments.

This embodiment further provides a system, including the first device and the second device in the foregoing embodiments. There may be one or more second devices. This is not limited in embodiments of this application.

This embodiment further provides a readable storage medium. The readable storage medium stores instructions. When the instructions are run on a device, the device performs the foregoing related method steps to implement the computing method in the foregoing embodiments.

This embodiment further provides a program product. When the program product runs on a device, the device is enabled to perform the foregoing related steps, to implement the computing method in the foregoing embodiments.

In addition, an embodiment of this application further provides an apparatus. The apparatus may be specifically a chip, a component, or a module. The apparatus may include a processor and a memory that are connected. The memory is configured to store executable instructions. When the apparatus runs, the processor may execute the executable instructions stored in the memory, to enable the chip to perform the computing method in the foregoing method embodiments.

The device, the readable storage medium, the program product, or the chip provided in embodiments may be configured to perform the corresponding method provided above. Therefore, for beneficial effects that can be achieved, refer to the beneficial effects of the corresponding method provided above. Details are not described herein again.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each specific application. However, it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one location, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, some of the technical solutions may be implemented in the form of a software product. The software product is stored in a storage medium and includes several instructions for instructing a computing device (which may be a personal computer, a server, a network device, or the like) or a device to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A computing method, wherein the method is applied to a first device, and the method comprises:
receiving a multimedia file sent by a second device;
performing artificial intelligence AI analysis on the multimedia file, to obtain feature information of the multimedia file; and
sending the feature information of the multimedia file to the second device.

2. The method according to claim 1, wherein the method further comprises:
receiving metadata that is of the multimedia file and that is sent by the second device; and
determining whether the multimedia file matches the metadata of the multimedia file.

3. The method according to claim 2, wherein the performing AI analysis on the multimedia file, to obtain feature information of the multimedia file comprises:
when determining that the multimedia file matches the metadata of the multimedia file, performing, by the first device, AI analysis on the multimedia file, to obtain the feature information of the multimedia file.

4. The method according to claim 2 or 3, wherein the method further comprises:
when determining that the multimedia file does not match the metadata of the multimedia file, sending, by the first device, first information to the second device, wherein the first information indicates that the multimedia file does not match the metadata of the multimedia file.

5. The method according to any one of claims 1 to 4, wherein the method further comprises:
receiving a request message sent by the second device; and
the sending the feature information of the multimedia file to the second device comprises:
sending the feature information of the multimedia file to the second device based on the request message.

6. The method according to any one of claims 1 to 5, wherein the method further comprises:
generating a thumbnail of the multimedia file.

7. A computing method, wherein the method is applied to a second device, and the method comprises:
when detecting a newly added multimedia file, sending the newly added multimedia file to a first device;
receiving feature information that is of the multimedia file and that is sent by the first device; and
generating an artificial intelligence AI album based on the feature information of the multimedia file, and/or establishing an index based on the feature information of the multimedia file, to provide a search function.

8. The method according to claim 7, wherein before the receiving feature information that is of the multimedia file and that is sent by the first device, the method further comprises:
sending metadata of the multimedia file to the first device.

9. The method according to claim 7 or 8, wherein the method further comprises:
storing the feature information of the multimedia file.

10. The method according to any one of claims 1 to 9, wherein the feature information of the multimedia file comprises at least one of the following information:
face information, label classification information, optical character recognition information, multimode vector information, and aesthetic score information.

11. A first device, comprising one or more processors, and one or more memories, wherein the one or more memories store one or more programs, and when the one or more programs are executed by the one or more processors, the computing method according to any one of claims 1 to 6 and claim 10 is performed.

12. A second device, comprising one or more processors, and one or more memories, wherein the one or more memories store one or more programs, and when the one or more programs are executed by the one or more processors, the computing method according to any one of claims 7 to 10 is performed.

13. A system, comprising the first device according to claim 11 and the second device according to claim 12.

14. A chip, wherein the chip comprises a processor and a communication interface, the communication interface is configured to: receive a signal, and transmit the signal to the processor, and the processor processes the signal, to perform the computing method according to any one of claims 1 to 10.

15. A readable storage medium, wherein the readable storage medium stores instructions, and when the instructions are run on a device, the computing method according to any one of claims 1 to 10 is performed.
